(19) Europäisches Patentamt

European Patent Office

Office européen des brevets

(11) **EP 4 443 934 A1**

(12) **EUROPEAN PATENT APPLICATION**
published in accordance with Art. 153(4) EPC

(43) Date of publication:
**09.10.2024 Bulletin 2024/41**

(21) Application number: **22906531.3**

(22) Date of filing: **13.12.2022**

(51) International Patent Classification (IPC):
**H04W 24/02** (2009.01)

(52) Cooperative Patent Classification (CPC):
**H04L 1/00; H04W 24/02;** Y02D 30/70

(86) International application number:
**PCT/CN2022/138530**

(87) International publication number:
**WO 2023/109786 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2021 CN 202111547386**

(71) Applicant: **VIVO MOBILE COMMUNICATION CO.,
LTD.**
**Dongguan, Guangdong 523863 (CN)**

(72) Inventors:
• **HUANG, Wei**
**Dongguan, Guangdong 523863 (CN)**
• **JIANG, Dajie**
**Dongguan, Guangdong 523863 (CN)**

(74) Representative: **Murgitroyd & Company**
**165-169 Scotland Street**
**Glasgow G5 8PL (GB)**

(54) **BACKSCATTER COMMUNICATION METHOD, TERMINAL, AND NETWORK SIDE DEVICE**

(57) This application provides a backscatter communication method, a terminal, and a network side device, and belongs to the field of communication technologies. The backscatter communication method according to embodiments of this application includes: receiving, by a first terminal, a first signal that is sent by a second terminal through backscattering based on a signal transmission parameter; and sending, by the first terminal, a second signal to a network side device. The second signal is obtained based on the first signal.

FIG. 11

## Description

## CROSS-REFERENCE TO RELATED APPLICATION

This application claims priority to Chinese Patent Application No. 202111547386.4, filed on December 16, 2021 and entitled "BACKSCATTER COMMUNICATION METHOD, TERMINAL, AND NETWORK SIDE DEVICE", which is incorporated herein by reference in its entirety.

## TECHNICAL FIELD

This application relates to the field of communication technologies, and specifically, to a backscatter communication method, a terminal, and a network side device.

## BACKGROUND

Backscatter communication (Backscatter Communication, BSC) means that a backscatter communication device uses a radio frequency signal from another device or an environment to perform signal modulation to transmit own information.

After large-scale cellular deployment of BSC terminal devices, to solve a problem that a radio frequency signal undergoes a double near-far effect caused by signal attenuation of a round-trip signal, a bistatic architecture is likely to be deployed. In this case, an RF radio frequency source and a BSC receiver are separated. For a person skilled in the art, there is an urgent need to implement a specific solution for how to communicate between a BSC terminal and a base station in the bistatic architecture.

## SUMMARY

Embodiments of this application provide a backscatter communication method, a terminal, and a network side device, which can solve a problem of how to communicate between BSC terminals and other devices in a cellular system after large-scale cellular deployment of the BSC terminals.

According to a first aspect, a backscatter communication method is provided, applied to a first terminal, the method including:

receiving, by a first terminal, a first signal that is sent by a second terminal through backscattering based on a signal transmission parameter; and
sending, by the first terminal, a second signal to a network side device, where the second signal is obtained based on the first signal.

According to a second aspect, a backscatter communication method is provided, applied to a second terminal, the method including:

sending, by a second terminal through backscattering, a first signal to a first terminal based on a signal transmission parameter.

According to a third aspect, a backscatter communication method is provided, applied to a network side device, the method including:

receiving, by a network side device, a second signal sent by a first terminal, where the second signal is obtained by the first terminal based on a first signal sent by a second terminal, and the first signal is sent by the second terminal through backscattering based on a signal transmission parameter; and
performing, by the network side device, target processing on the second signal based on the signal transmission parameter.

According to a fourth aspect, a communication apparatus is provided, including:

a receiving module, configured to receive a first signal that is sent by a second terminal through backscattering based on a signal transmission parameter; and
a sending module, configured to send a second signal to a network side device, where the second signal is obtained based on the first signal.

According to a fifth aspect, a backscatter communication apparatus is provided, including:
a sending module, configured to send, through backscattering, a first signal to a first terminal based on a signal transmission parameter.

According to a sixth aspect, a communication apparatus is provided, including:

a receiving module, configured to receive a second signal sent by a first terminal, where the second signal is obtained by the first terminal based on a first signal sent by a second terminal, and the first signal is sent by the second terminal through backscattering based on a signal transmission parameter; and
a processing module, configured to perform target processing on the second signal based on the signal transmission parameter.

According to a seventh aspect, a first terminal is provided. The first terminal includes a processor and a memory. The memory stores a program or instructions executable on the processor. The program or the instructions, when executed by the processor, implement the steps of the method according to the first aspect.

According to an eighth aspect, a first terminal is provided, including a processor and a communication interface, where the communication interface is configured to receive a first signal that is sent by a second terminal through backscattering based on a signal transmission parameter; and send a second signal to a network side device.

According to a ninth aspect, a second terminal is provided. The second terminal includes a processor and a memory. The memory stores a program or instructions executable on the processor. The program or the instructions, when executed by the processor, implement the steps of the method according to the second aspect.

According to a tenth aspect, a second terminal is provided, including a processor and a communication interface, where the communication interface is configured to send, through backscattering, a first signal to a first terminal based on a signal transmission parameter.

According to an eleventh aspect, a network side device is provided. The network side device includes a processor and a memory. The memory stores a program or instructions executable on the processor. The program or the instructions, when executed by the processor, implement the steps of the method according to the third aspect.

According to a twelfth aspect, a network side device is provided, including a processor and a communication interface. The communication interface is configured to receive a second signal sent by a first terminal, where the second signal is obtained by the first terminal based on a first signal sent by a second terminal, and the first signal is sent by the second terminal through backscattering based on a signal transmission parameter; and the processor is configured to perform target processing on the second signal based on the signal transmission parameter.

According to a thirteenth aspect, a backscatter communication system is provided, including: a first terminal, a second terminal, and a network side device. The first terminal may be configured to perform the steps of the backscatter communication method according to the first aspect. The second terminal may be configured to perform the steps of the backscatter communication method according to the second aspect. The network side device may be configured to perform the steps of the backscatter communication method according to the third aspect.

According to a fourteenth aspect, a readable storage medium is provided, where the readable storage medium stores a program or instructions, and the program or the instructions, when executed by a processor, implement the steps of the method according to the first aspect, or implement the steps of the method according to the second aspect, or implement the steps of the method according to the third aspect.

According to a fifteenth aspect, a chip is provided, where the chip includes a processor and a communication interface, the communication interface is coupled to the processor, and the processor is configured to run a program or instructions, to implement the method according to the first aspect, or implement the method according to the second aspect, or implement the method according to the third aspect.

According to a sixteenth aspect, a computer program/program product is provided, where the computer program/program product is stored in a storage medium, and the computer program/program product is executed by at least one processor to implement the steps of the backscatter communication method according to the first aspect, the second aspect, or the third aspect.

In embodiments of this application, the first terminal receives the first signal that is sent by the second terminal through backscattering based on the signal transmission parameter. The first terminal sends the second signal to the network side device. In other words, the second terminal performing backscattering can communicate with other devices. The second signal is obtained based on the first signal. According to the foregoing solution, communication between a BSC terminal, a relay terminal, and a base station in a bistatic backscatter communication architecture is implemented.

**BRIEF DESCRIPTION OF THE DRAWINGS**

FIG. 1 is a structural diagram of a wireless communication system to which an embodiment of this application can be applied;
FIG. 2 is a schematic principle diagram of backscatter communication according to an embodiment of this application;
FIG. 3 is a schematic diagram of an MBCS according to an embodiment of this application;
FIG. 4 is a schematic diagram of a BBCS according to an embodiment of this application;
FIG. 5 is a first schematic diagram of a backscatter communication cellular networking architecture according to an embodiment of this application;
FIG. 6 is a second schematic diagram of a backscatter communication cellular networking architecture according to an embodiment of this application;
FIG. 7 is a third schematic diagram of a backscatter communication cellular networking architecture according to an embodiment of this application;
FIG. 8 is a fourth schematic diagram of a backscatter communication cellular networking architecture according to an embodiment of this application;
FIG. 9 is a fifth schematic diagram of a backscatter communication cellular networking architecture according to an embodiment of this application;
FIG. 10 is a sixth schematic diagram of a backscatter communication cellular networking architecture according to an embodiment of this application;
FIG. 11 is a first schematic flowchart of a backscatter communication method according to an embodiment of this application;
FIG. 12 is a first schematic scenario diagram of a backscatter communication method according to an embodiment of this application;
FIG. 13 is a second schematic scenario diagram of a backscatter communication method according to an embodiment of this application;

FIG. 14 is a third schematic scenario diagram of a backscatter communication method according to an embodiment of this application;

FIG. 15 is a first schematic diagram of an interaction process of a backscatter communication method according to an embodiment of this application;

FIG. 16 is a fourth schematic scenario diagram of a backscatter communication method according to an embodiment of this application;

FIG. 17 is a second schematic flowchart of a backscatter communication method according to an embodiment of this application;

FIG. 18 is a fifth schematic scenario diagram of a backscatter communication method according to an embodiment of this application;

FIG. 19 is a first schematic structural diagram of a communication apparatus according to an embodiment of this application;

FIG. 20 is a second schematic structural diagram of a backscatter communication apparatus according to an embodiment of this application;

FIG. 21 is a third schematic structural diagram of a communication apparatus according to an embodiment of this application;

FIG. 22 is a schematic structural diagram of a communication device according to an embodiment of this application;

FIG. 23 is a schematic diagram of a hardware structure of a terminal according to an embodiment of this application; and

FIG. 24 is a schematic structural diagram of a network side device according to an embodiment of this application.

## DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish similar objects, but are not used to describe a specific sequence or order. It should be understood that the terms so used are interchangeable under appropriate circumstances such that embodiments of this application are capable of being practiced in other sequences than those illustrated or described herein, and that the objects distinguished by "first" and "second" are generally a class and do not limit the number of objects, e.g., the first object may be one or more. In addition, "and/or" in the description and claims represents at least one of connected objects, and the character "/" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6th generation (6th Generation, 6G) communication system.

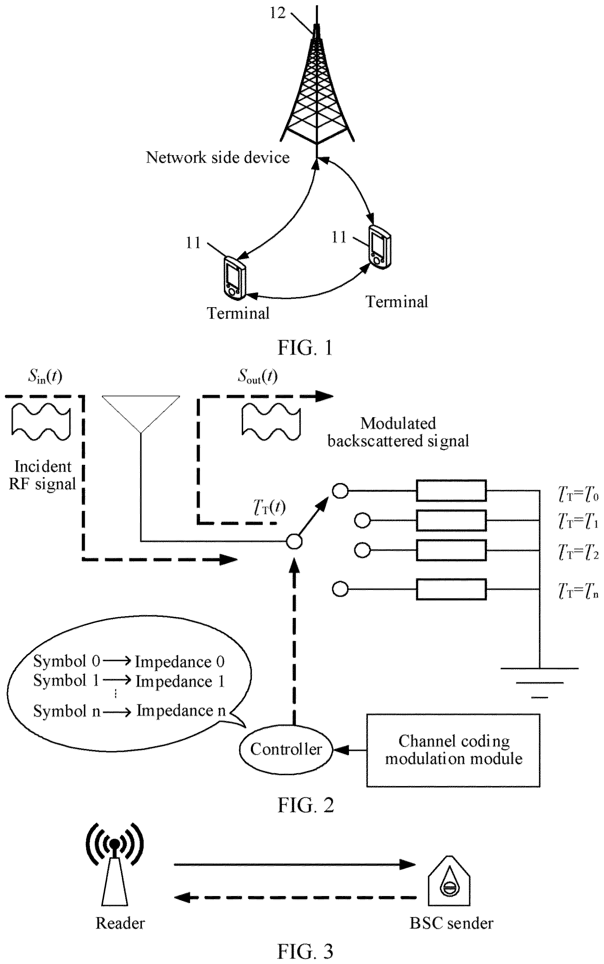

FIG. 1 is a block diagram of a wireless communication system to which an embodiment of this application can be applied. The communication system includes terminals 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart home (home equipment with wireless communication functions, such as a refrigerator, a TV, a washing machine, or furniture), a game console, a personal computer (personal computer, PC), a teller machine, or a self-service machine. The wearable device includes: a smart watch, a smart band, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in embodiments of this application, a specific type of the terminal 11 is not limited. The network side device 12 may include an access network device or a core network device, where the access network device 12 may also be referred to as a radio access network device, a radio access network (Radio Access Network, RAN), a radio access network function, or a radio access network unit.

The access network device 12 may include a base station, a wireless local area network (Wireless Local Area Network, WLAN) access point, a Wireless Fidelity (Wireless Fidelity, WiFi) node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a Home Node B, a Home evolved Node B, a transmitting receiving point (Transmitting Receiving Point, TRP), or another suitable term in the field. As long as the same technical effect is achieved, the base station is not limited to a specific technical vocabulary. It should be noted that, only a base station in an NR system is used as an example in embodiments of this application, and the specific type of the base station is not limited.

The method according to embodiments of this application may be applied to backscatter communication terminals, including, for example, a tag (Tag) in conventional radio frequency identification (Radio Frequency Identification, RFID) and an Internet of Things (Internet of Things, IoT) device.

Backscatter communication means that a backscatter communication device uses a radio frequency signal from another device or an environment to perform signal modulation to transmit own information. A modulation circuit of the backscatter communication device is shown in FIG. 2. The backscatter communication device controls a reflection coefficient $\Gamma$ of the circuit by adjusting internal impedances of the backscatter communication device, to change an amplitude, a frequency, a phase, and the like of an incident signal, implementing signal modulation. The reflection coefficient of the signal may be represented by:

$$\Gamma = \frac{Z_1 - Z_0}{Z_1 + Z_0} = |\Gamma|e^{j\theta_T}$$

$Z_0$ is an antenna characteristic impedance and $Z_1$ is a load impedance. Assuming that the incident signal is $S_{in}(t)$, an output signal is $S_{out}(t) = S_{in}(t)|\Gamma|e^{j\theta_T}$. Therefore, corresponding amplitude modulation, frequency modulation, or phase modulation can be implemented by properly controlling the reflection coefficient.

From the perspective of a manner of controlling or changing the load impedance Zi, backscatter communication is divided into backscatter communication based on analog modulation and backscatter communication based on digital modulation. In backscatter communication based on analog modulation, the load impedance $Z_1$ is changed by adjusting a built-in analog circuit, and the circuit is adjusted in a continuous manner. Therefore, the adjustable reflection coefficient of the circuit can be adjusted with high precision. As shown in FIG. 2, in backscatter communication based on digital modulation, several pre-built-in load impedances are available for selection, and one of the load impedances is selected by a controller to change the reflection coefficient. Therefore, precision of the reflection coefficient of digital modulation is strongly related to a quantity of built-in load impedances.

Based on this, the backscatter communication device may be a Tag in a conventional RFID system, a passive or semi-passive IoT (Passive/Semi-Passive IoT) device, or an independent reconfigurable intelligent surface (Reconfigurable Intelligence Surface, RIS) in an intelligence metasurface. For convenience, such backscatter communication devices are collectively referred to as BSC terminals in embodiments of this application.

For the architecture of backscatter communication, there are three types of backscatter communication systems: monostatic backscatter communication systems (Monostatic backscatter communication systems, MBCSs), bistatic backscatter communication systems (Bistatic backscatter communication systems, BBCSs), and ambient backscatter communication systems (Ambient backscatter communication systems, ABCSs).

FIG. 3 shows an MBCS. For example, the conventional RFID system is a typical MBCS. The system includes a BSC sender (for example, a Tag) and a reader Reader. The reader Reader includes an RF radio frequency source and a BSC receiver. The RF radio frequency source is configured to generate an RF signal to power the BSC sender/Tag. The BSC sender backscatters the modulated RF signal, and the BSC receiver in the Reader receives and demodulates the backscattered signal. Because the RF radio frequency source and BSC receiver are in the same device, for example, in the Reader, this system is a monostatic backscatter communication system. In the MBCS system, because the RF signal sent from the BSC sender undergoes a double near-far effect caused by signal attenuation of a round-trip signal, signal energy attenuation is large. Therefore, the MBCS system is generally used for short-distance backscatter communication, for example, conventional RFID applications.

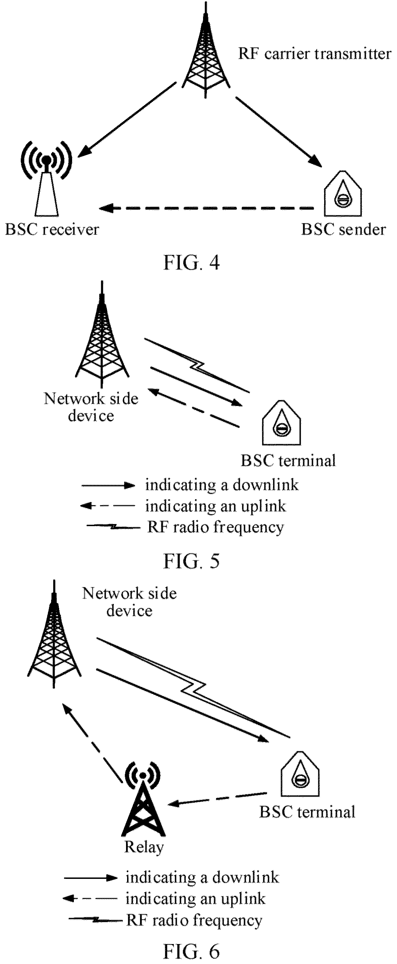

Different from the MBCS system, an RF radio frequency source and a BSC receiver in a BBCS system are separated. FIG. 4 is a schematic diagram of a BBCS system. Therefore, the BBCS avoids the problem of large attenuation of a round-trip signal. In addition, performance of the BBCS communication system can be further improved by properly placing the RF radio frequency source. Similar to the BBCS system, an RF radio frequency source and a BSC receiver in an ABCS system are also separated. However, different from the BBCS system in which the radio frequency source is a dedicated signal radio frequency source, the radio frequency source in the ABCS system may be a radio frequency source in an available environment, for example, a TV tower, a cellular base station, a WiFi signal, or a Bluetooth signal.

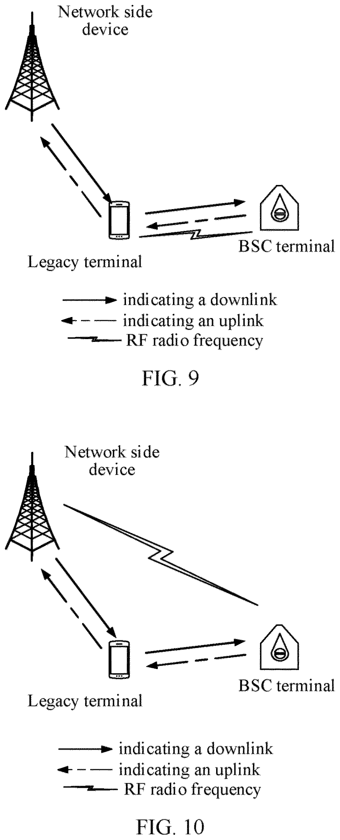

In a case of large-scale cellular deployment of backscatter communication terminal devices, backscatter communication cellular networking architectures may be divided into six architectures as shown in FIG. 5 to FIG. 10 based on differences in radio frequency sources, uplink data transmission, and downlink data transmission.

In an architecture 1 shown in FIG. 5, a network side device is a radio frequency source, and is also a downlink data sender of a BSC terminal and an uplink data receiver of the BSC terminal. In other words, the network side device directly communicates with the BSC terminal in this case. Such an architecture has high requirements on receiving sensitivity of the network side device and the BSC terminal, but is simple to deploy.

In an architecture 2 shown in FIG. 6, a network side device is also a radio frequency source. However, in this case, there is a Helper or a relay Relay, which is configured to relay uplink data from a BSC terminal to the network side device. Certainly, the Helper or the Relay may also relay downlink data from the network side device to the BSC terminal, which will not be described herein.

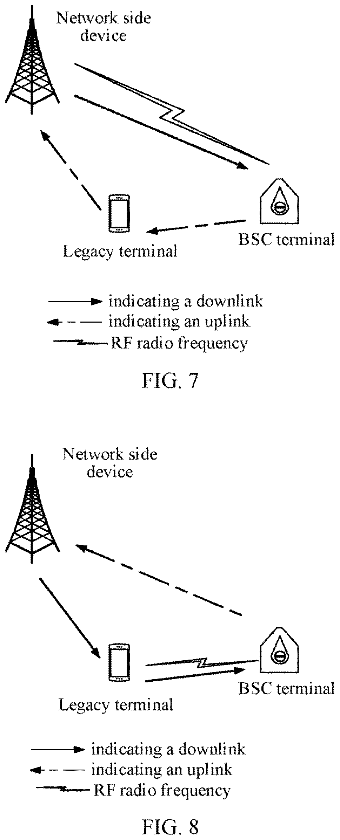

In an architecture 3 to an architecture 6 shown in FIG. 7 to FIG. 10, existing or legacy (Legacy) terminals are used as radio frequency sources, or used for forwarding downlink data, or used for forwarding uplink data, and so on. In the architecture 3, a network side device is a radio frequency source. The network side device directly transmits downlink data to a BSC terminal. In uplink transmission, the BSC terminal first backscatters data to a Legacy terminal, and then the Legacy terminal forwards the data to the network side device. In an architecture 4, a radio frequency source is a terminal. Downlink data is first sent by the network side device to a legacy terminal, and then forwarded by the legacy terminal to a BSC terminal. In uplink transmission, the BSC terminal directly transmits a signal to the network side device in the reverse direction. In an architecture 5, a radio frequency source is a terminal. Downlink data is first sent by a network side device to a Legacy terminal, and then forwarded by the Legacy terminal to a BSC terminal. In uplink transmission, the BSC terminal first backscatters data to the Legacy terminal, and then the Legacy terminal forwards the data to the network side device. In an architecture 6, a radio frequency source is a network side device. Downlink data is first sent by the network side device to a Legacy terminal, and then forwarded by the Legacy terminal to a BSC terminal. In uplink transmission, the BSC terminal first backscatters data to the Legacy terminal, and then the Legacy terminal forwards the data to the network side device.

The Legacy terminals may also be referred to as conventional terminals or ordinary terminals, such as existing mobile phones, in-vehicle devices, customer premise equipment (Customer Premise Equipment, CPE), and other terminals with normal hardware capabilities.

In an embodiment, according to the backscatter communication solution, a signal transmission parameter for backscattering and a method for carrying indication information of the signal transmission parameter are designed to support a BSC terminal in using a signal backscattered by a radio frequency source for signal modulation, and in bistatic backscatter communication in which a Legacy terminal or a Relay/Helper is used as a relay to transmit uplink data to a network side device, the relay terminal/Helper can demodulate a modulated signal of the BSC terminal based on the indication information, thereby solving a problem of weak uplink coverage of the BSC terminal. It should be noted that although the following embodiments are described using a Legacy relay terminal as an example, the same solution can be extended to conventional relay base station or Helper scenarios.

The backscatter communication method provided in embodiments of this application is described in detail below with reference to the accompanying drawings by using some embodiments and application scenarios.

In the following embodiment, an example in which a first terminal is a Legacy terminal and a second terminal is a BSC terminal is used for description.

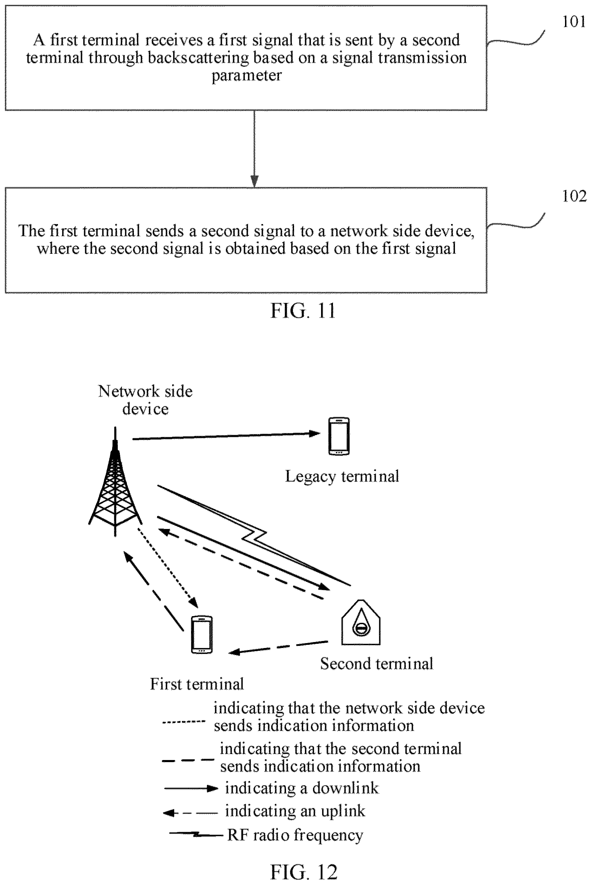

FIG. 11 is a first schematic flowchart of a backscatter communication method according to an embodiment of this application. As shown in FIG. 11, the method according to this embodiment includes the following steps:

Step 101: A first terminal receives a first signal that is sent by a second terminal through backscattering based on a signal transmission parameter.

Specifically, the foregoing system architectures shown in FIG. 6 to FIG. 10 may be used for the method according to this embodiment. The first terminal receives the first signal sent by the second terminal. The first signal is a signal sent through backscattering based on the signal transmission parameter.

The signal transmission parameter may be determined by the first terminal, or obtained from the second terminal or a network side device.

Step 102: The first terminal sends a second signal to the network side device, where the second signal is obtained based on the first signal.

Specifically, after receiving the first signal, the first terminal forwards the first signal, or processes the first signal to obtain the second signal, and sends the second signal to the network side device.

According to the method in this embodiment, the first terminal receives the first signal that is sent by the second terminal through backscattering based on the signal transmission parameter. The first terminal sends the second signal to the network side device. In other words, the second terminal performing backscattering can communicate with other devices. The second signal is obtained based on the first signal. According to the foregoing solution, communication between a BSC terminal, a relay terminal, and a base station in a bistatic backscatter communication architecture is implemented.

Optionally, the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, period length information of a preamble sequence, synchronization information, a frequency shift parameter, an identifier of the second terminal, an identifier of the first terminal, a transmission identifier, and total transmission duration that is for a modulated signal, where
the time window is used to indicate a time window in which the first signal is sent;
the synchronization information includes starting time of a subframe or a symbol of the first signal, or information about an offset between a timing of the first signal and a timing of the network side device;
the delimiter is used to indicate a starting moment of the first signal;
the preamble sequence is used to indicate information related to signal frame synchronization of the first signal;
the frequency shift parameter is used to indicate parameter information for frequency shifting the first signal;
the transmission identifier is used to indicate whether the first signal is transmitted periodically; and
the total transmission duration is used to indicate total duration for transmission of the first signal.

Specifically, the time domain resource includes, for example, a slot or a symbol, and the frequency domain resource includes, for example, carrier frequency information, a carrier frequency band, a bandwidth part (Band Width Part, BWP), or a resource block (Resource Block, RB).

The time window is used to indicate the time window in which the first signal is sent, for example, how long it takes for the second terminal to send the first signal after receiving indication information carrying the signal transmission parameter.

The time information of the signal transmission within the transmission period includes, for example, a time range or duration of the signal transmission, duration of non-transmission, or a proportion of the duration of the signal transmission or the non-transmission. For example, the transmission period is 10 ms, and one transmission period includes signal transmission time of the second terminal, for example, 5 ms, and non-transmission time, for example, 5 ms, where during the non-transmission time, the second terminal can perform operations such as energy collection or energy saving.

The period length information includes at least one of the following: one or more period lengths for a modulated signal, a length of a subframe or a slot, a quantity of symbols included in a subframe or a slot, and the like.

The synchronization information includes at least one of the following: starting time of a subframe or a symbol of the first signal, and information about an offset between a timing of the first signal and a timing of the network side device.

The parameter information for frequency shifting the first signal includes whether frequency shift is supported, a center frequency and bandwidth of frequency shifting, and the like.

The transmission identifier is used to indicate whether the first signal is transmitted in one period or a plurality of periods, thereby indicating whether a receiver performs buffering processing or does not need buffering processing. Optionally, the transmission in the plurality of periods may be intermittent transmission in the plurality of periods.

The total transmission duration is used to indicate how many period lengths the total duration for transmission of the first signal is. Optionally, the total transmission duration may further include: a receiver energy saving and buffering indication, indicating that the receiver does not need to receive signals when not transmitting signals, to reduce power consumption, or performs buffering processing when the total duration is a plurality of period lengths.

The coding method is used to indicate a channel coding method and/or a baseband coding method used for signal transmission.

Optionally, step 102 may be implemented in the following manner:

The first terminal demodulates and decodes the first signal based on the signal transmission parameter to obtain a third signal, modulates and encodes the third signal to generate the second signal, and sends the second signal to the network side device; or
the first terminal amplifies the first signal to obtain the second signal, and sends the second signal to the network side device.

Specifically, based on the received signal transmission parameter corresponding to the second terminal, the first terminal receives the first signal sent by the second terminal and demodulates and decodes the first signal, modulates and encodes the third signal obtained through demodulation and decoding to generate the second signal, and sends the second signal to the network side device. Because the first terminal demodulates and decodes the first signal, reliability of the signal transmission is high.

Alternatively, the first terminal sends the signal of the second terminal in an amplified and forwarded manner, that is, amplifies the first signal to obtain the second signal, and sends the second signal to the network side device.

In the foregoing implementation, the second signal sent by the first terminal to the network side device may be generated based on the first signal through amplification or parsing and then re-modulation and encoding. This is highly flexible, and the second signal generated through re-parsing is more reliable.

In an embodiment, the first terminal obtains the signal transmission parameter in at least one of the following manners:

the first terminal receives first indication information sent by the network side device, where the first indication information is used to indicate the signal transmission parameter to the first terminal;

the first terminal receives second indication information sent by the network side device, where the second indication information is used to indicate the signal transmission parameter to the second terminal, and the second indication information is information that both the first terminal and the second terminal are capable of demodulating;

the first terminal receives third indication information sent by the second terminal, where the third indication information is used to indicate the signal transmission parameter to the first terminal; and

the first terminal determines the signal transmission parameter.

Specifically, the first terminal may obtain the signal transmission parameter based on the indication information of the network side device, or obtain the signal transmission parameter based on the third indication information of the second terminal, or determine the signal transmission parameter by itself.

The obtaining the signal transmission parameter based on the indication information of the network side device includes the following cases:

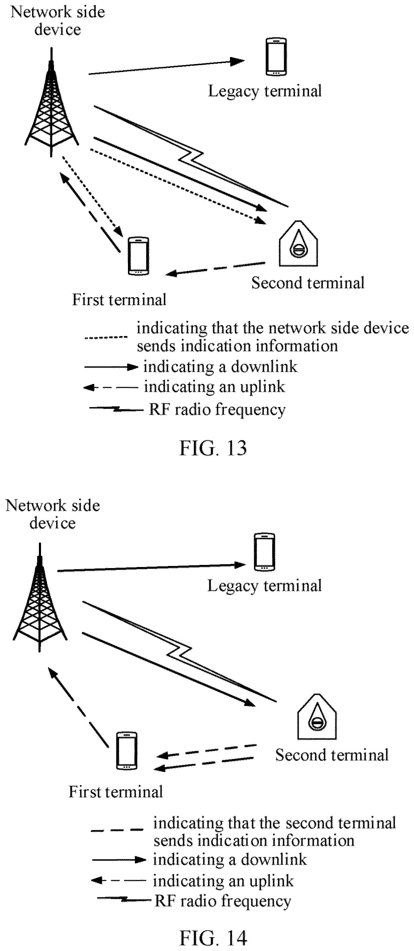

The signal transmission parameter is obtained based on the first indication information sent by the network side device, where the first indication information is specifically used to be sent to the first terminal, and as shown in FIG. 12, the signal transmission parameter may be determined by the network side device or may be sent by the second terminal to the network side device based on the indication information; or

the signal transmission parameter is obtained based on the second indication information sent by the network side device. Both the first terminal and the second terminal can parse the second indication information. For example, the second indication information sent by the network side device to the second terminal already includes the signal transmission parameter that the first terminal needs to obtain, and not only the second terminal can demodulate the second indication information, but the first terminal can also demodulate the second indication information, as shown in FIG. 13.

As shown in FIG. 14, the first terminal receives the third indication information sent by the second terminal, and obtains the signal transmission parameter based on the third indication information.

In the foregoing implementation, the first terminal can obtain the signal transmission parameter in various manners. This is highly flexible, and implementation complexity is low.

Optionally, the first indication information or the second indication information is carried in at least one of the following:

downlink control information (Downlink Control Information, DCI);

a preamble (preamble) sequence;

radio resource control (Radio Resource Control, RRC) signaling; and

a media access control control element (Media Access Control Control Element, MAC CE).

The DCI may be DCI in an existing format with extended functions, or newly designed DCI in a new format, which is not limited in embodiments of this application.

Optionally, the third indication information is carried in at least one of the following:

two-step sidelink control information (Sidelink Control Information, SCI);

one-step SCI;

a preamble sequence;

sidelink SL RRC signaling; and

a sidelink SL MAC CE.

The third indication information is used by the second terminal to indicate the signal transmission parameter to the first terminal. Optionally, the second terminal reports the signal transmission parameter to the first terminal through an interface similar to a PC5 interface in a sidelink SL.

The two-step SCI may reuse current two-step SCI to carry the transmitted indication information. A 2nd-stage SCI format field is extended in 1st stage SCI, so that the two-step SCI supports the newly defined 2nd stage SCI format between the second terminal and the first terminal, and the newly designed 2nd stage format includes an identifier ID of the first terminal, an identifier ID of the second terminal, indication information of the signal transmission parameter, and the like.

Because the current two-step SCI format is designed for a PC5 interface between Legacy terminals, whether for 1st stage SCI or 2nd stage SCI, signaling overhead is large. Moreover, the design of the two-step SCI is difficult to implement for BSC terminals.

Therefore, a new SCI format may be further designed to carry the transmitted indication information. Optionally, the newly designed SCI may be one-step SCI, and the SCI carries at least the identifier ID of the first terminal, the identifier ID of the second terminal, indication information of the signal transmission parameter, resource information, and the like.

In an embodiment, the second terminal is powered in at least one of the following manners:

> the second terminal is powered by a radio frequency signal transmitted by the network side device;
> the second terminal is powered by a radio frequency signal transmitted by another device;
> the second terminal is powered by a mechanical power supply;
> the second terminal is powered by a vibration power supply;
> the second terminal is powered by solar energy; and
> the second terminal is powered by thermal energy.

Specifically, a power supply source and a radio frequency source may be the same device (for example, both are the network side device), or may be different devices.

The second terminal may be powered by the radio frequency signal of the network side device, or the second terminal may be powered by another radio frequency signal.

The second terminal is powered by a non-radio frequency signal, including but not limited to a mechanical power supply, a vibration power supply, solar energy, thermal energy, and the like.

In the foregoing implementation, the second terminal can be powered in various manners. This is highly flexible, and can increase reliability of the device.

In an embodiment, both the second terminal and the first terminal are within the coverage of the network side device, and the second terminal has a capability to receive and parse indication information sent by the network side device. Meanwhile, signaling interaction and data transmission may be performed between the first terminal and the second terminal through PC5-like interfaces. As shown in FIG. 12 or FIG. 13, in this scenario, the signal transmission parameter transmitted by the second terminal to the first terminal may be indicated to the first terminal by the network side device through indication information. For a method for carrying the indication information, refer to the foregoing embodiments. For example, the following manners may be included:

> Manner 1: As shown in FIG. 13, the second indication information sent by the network side device to the second terminal already includes the signal transmission parameter transmitted in the reverse direction by the second terminal to the first terminal. Not only can the second terminal parse the second indication information, the first terminal can also parse the second indication information. In this solution, the first terminal can obtain the signal transmission parameter without the need for the network side device to separately send the indication information to the first terminal.

> Manner 2: As shown in FIG. 12, the network side device separately sends the first indication information including the signal transmission parameter that is transmitted in the reverse direction by the second terminal to the first terminal, where the first indication information and the indication information (for example, the second indication information) that is sent by the network side device to the second terminal are not the same indication information.

> Manner 3: As shown in FIG. 12, the network side device does not learn of the signal transmission parameter that is transmitted in the reverse direction by the second terminal to the first terminal. The second terminal first reports own signal transmission parameter to the network side device, and then the network side device notifies the first terminal through the indication information.

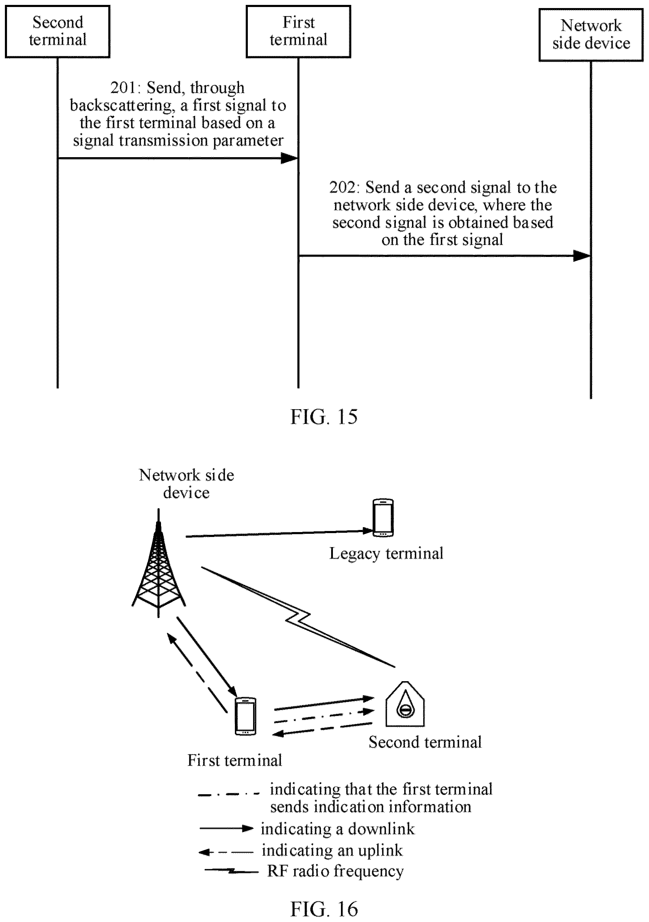

In another embodiment, as shown in FIG. 16, the second terminal and the first terminal are both within or outside the coverage of the base station, and the second terminal has the capability to receive and parse indication information sent by the network side device. Meanwhile, signaling interaction and data transmission may be performed between the first terminal and the second terminal through PC5-like interfaces. In this scenario, because the first terminal has strong terminal capabilities, the first terminal can serve as a master UE (Master UE) and allocate transmission resources and transmission indication information to other second terminals in a group where the master UE is located, and send signal transmission parameter indication information of the second terminal to the second terminal through an interface similar to a PC5 interface in an SL.

FIG. 15 is a first schematic diagram of an interaction process of a backscatter communication method according to an embodiment of this application. As shown in FIG. 15, the method according to this embodiment includes the following steps:

Step 201: A second terminal sends, through backscattering, a first signal to a first terminal based on a signal transmission parameter.

Step 202: The first terminal sends a second signal to a network side device, where the second signal is obtained based on the first signal.

Optionally, the method further includes:
obtaining, by the second terminal, the signal transmission parameter. Optionally, the signal transmission parameter includes at least one of the following:

> a time domain resource, a frequency domain resource, a time window, a precoding parameter, a space-time code parameter, an aperiodic transmission mode, period length information, time information of signal transmission within a transmission period, a modulation method, a coding method, a delimiter, period length information of a preamble sequence, synchronization information, a frequency shift parameter, an identifier of the second terminal, an identifier of the first terminal, a transmission identifier, and total transmission duration that is for a modulated signal, where

the time window is used to indicate a time window in which the first signal is sent;

the synchronization information includes starting time of a subframe or a symbol of the first signal, or information about an offset between a timing of the first signal and a timing of the network side device;

the delimiter is used to indicate a starting moment of the first signal;

the preamble sequence is used to indicate information related to signal frame synchronization of the first signal;

the frequency shift parameter is used to indicate parameter information for frequency shifting the first signal;

the transmission identifier is used to indicate whether the first signal is transmitted periodically; and

the total transmission duration is used to indicate total duration for transmission of the first signal.

Optionally, the obtaining, by the second terminal, the signal transmission parameter includes: obtaining, by the second terminal, the signal transmission parameter in at least one of the following manners:

receiving, by the second terminal, second indication information sent by the network side device, where the second indication information is used to indicate the signal transmission parameter to the second terminal, and the second indication information is information that both the first terminal and the second terminal are capable of demodulating;

receiving, by the second terminal, fourth indication information sent by the first terminal, where the fourth indication information is used to indicate the signal transmission parameter to the second terminal; and

determining, by the second terminal, the signal transmission parameter.

Specifically, the second terminal may obtain the signal transmission parameter based on the indication information sent by the network side device, or obtain the signal transmission parameter based on the indication information sent by the first terminal, or determine the signal transmission parameter by itself.

As shown in FIG. 16, the second terminal receives the fourth indication information sent by the first terminal, where the fourth indication information is used to indicate the signal transmission parameter.

Optionally, as shown in FIG. 14, the method further includes the following steps: sending, by the second terminal, third indication information to the first terminal, where the third indication information is used to indicate the signal transmission parameter to the first terminal.

Optionally, the second indication information is carried in at least one of the following:

downlink control information DCI;
a preamble sequence;
radio resource control RRC signaling; and
a media access control control element MAC CE.

Optionally, the third indication information is carried in at least one of the following:

two-step sidelink control information SCI;
one-step SCI;
a preamble sequence;
sidelink SL RRC signaling; and
a sidelink SL MAC CE.

Optionally, the fourth indication information is carried in at least one of the following:

two-step sidelink control information SCI;
one-step SCI;
a preamble sequence;
sidelink SL RRC signaling; and
a sidelink SL MAC CE.

Optionally, the second terminal is powered in at least one of the following manners:

the second terminal is powered by a radio frequency signal transmitted by the network side device;
the second terminal is powered by a radio frequency signal transmitted by another device;
the second terminal is powered by a mechanical power supply;
the second terminal is powered by a vibration power supply;
the second terminal is powered by solar energy; and
the second terminal is powered by thermal energy.

The specific implementation process and technical effects of the method in this embodiment are similar to those in the first terminal-side method embodiments. For details, refer to the detailed description in the first terminal-side method embodiment, which are not repeated herein.

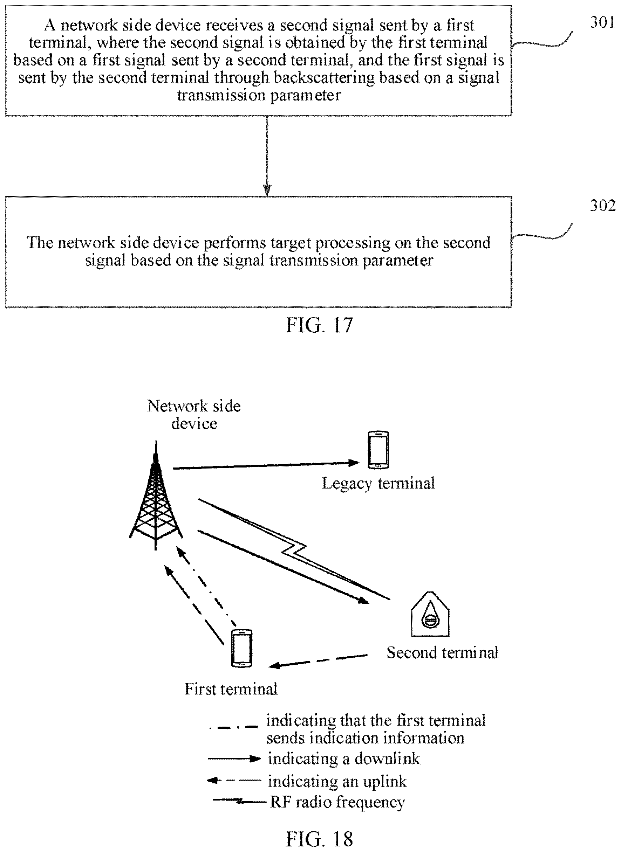

FIG. 17 is a second schematic flowchart of a backscatter communication method according to an embodiment of this application. As shown in FIG. 17, the method according to this embodiment includes the following steps:

Step 301: A network side device receives a second signal sent by a first terminal, where the second signal is obtained by the first terminal based on a first signal sent by a second terminal, and the first signal is sent by the second terminal through backscattering based on a signal transmission parameter.

Step 302: The network side device performs target processing on the second signal based on the signal transmission parameter.

The target processing is, for example, demodulating and decoding the second signal.

Optionally, the method further includes: obtaining, by the network side device, the signal transmission parameter, where optionally, the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, period length information of a preamble sequence, synchronization information, a frequency shift parameter, an identifier of the second terminal, an identifier of the first terminal, a transmission identifier, and total transmission duration that is for a modulated signal, where

the time window is used to indicate a time window in which the first signal is sent;

the synchronization information includes starting time of a subframe or a symbol of the first signal, or information about an offset between a timing of the first signal and a timing of the network side device;

the delimiter is used to indicate a starting moment of the first signal;

the preamble sequence is used to indicate information related to signal frame synchronization of the first signal;

the frequency shift parameter is used to indicate parameter information for frequency shifting the first signal;

the transmission identifier is used to indicate whether the first signal is transmitted periodically; and

the total transmission duration is used to indicate total duration for transmission of the first signal.

Optionally, the obtaining, by the network side device, the signal transmission parameter includes: obtaining the signal transmission parameter in at least one of the following manners:

receiving, by the network side device, fifth indication information sent by the second terminal, where the fifth indication information is used to indicate the signal transmission parameter to the network side device;

receiving, by the network side device, sixth indication information sent by the first terminal, where the sixth indication information is used to indicate the signal transmission parameter to the network side device; and

determining, by the network side device, the signal transmission parameter.

Specifically, the network side device may obtain the signal transmission parameter based on the indication information sent by the second terminal (as shown in FIG. 18), or obtain the signal transmission parameter based on the indication information sent by the first terminal (as shown in FIG. 12), or determine the signal transmission parameter by itself.

Optionally, the method further includes:

sending, by the network side device, first indication information to the first terminal, where the first indication information is used to indicate the signal transmission parameter to the first terminal; or

sending, by the network side device, second indication information to the second terminal, where the second indication information is used to indicate the signal transmission parameter to the second terminal; or

sending, by the network side device, second indication information to the first terminal, where the second indication information is used to indicate the signal transmission parameter to the first terminal.

Optionally, before the network side device sends the first indication information, the signal transmission parameter may be determined or the fifth indication information may be received. Before the network side device sends the second indication information, the signal transmission parameter may be determined or the sixth indication information may be received.

Optionally, the first indication information or the second indication information is carried in at least one of the following:

downlink control information DCI;
a preamble sequence;
radio resource control RRC signaling; and
a media access control control element MAC CE.

Optionally, the fifth indication information or the sixth indication information is carried in at least one of the following:

two-step sidelink control information SCI;
one-step SCI;
a preamble sequence;
sidelink SL RRC signaling; and
a sidelink SL MAC CE.

The backscatter communication method according to embodiments of this application may be performed by a backscatter communication apparatus. In this embodiment of this application, the backscatter communication apparatus provided in embodiments of this application is described by taking the backscatter communication method performed by the backscatter communication apparatus as an example.

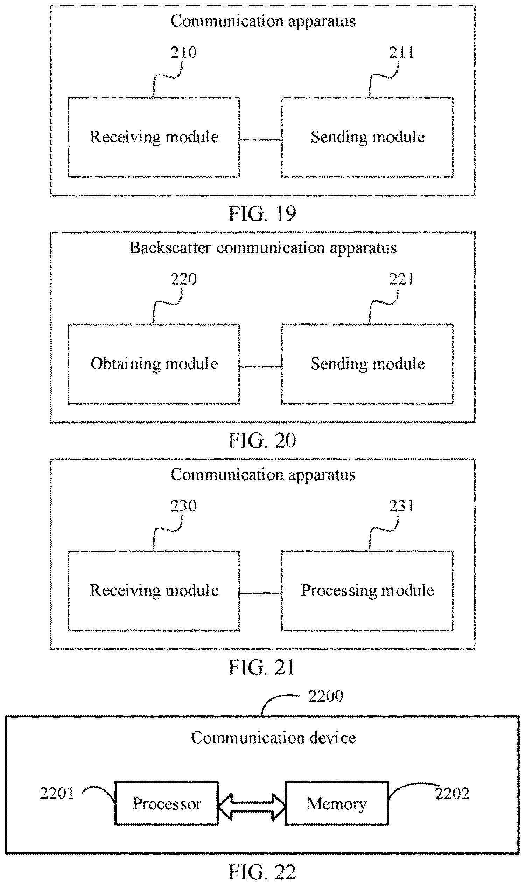

FIG. 19 is a first schematic structural diagram of a communication apparatus according to this application. As shown in FIG. 19, the communication apparatus according to this embodiment includes:

a receiving module 210, configured to receive a first signal that is sent by a second terminal through backscattering based on a signal transmission parameter; and
a sending module 211, configured to send a second signal to a network side device, where the second signal is obtained based on the first signal.

According to the apparatus in this embodiment, the receiving module receives the first signal that is sent by the second terminal through backscattering based on the signal transmission parameter. The sending module sends the second signal to the network side device. In other words, the second terminal performing backscattering can communicate with other devices. The second signal is obtained based on the first signal. According to the foregoing solution, communication between a BSC terminal, a relay terminal, and a base station in a bistatic backscatter communication architecture is implemented.

Optionally, the apparatus further includes:
an obtaining module, configured to obtain the signal transmission parameter, where the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, preamble sequence synchronization information, a frequency shift parameter, an identifier of the second terminal, an identifier of the first terminal, a transmission identifier, and total transmission duration that is for a modulated signal, where
the time window is used to indicate a time window in which the first signal is sent;
the synchronization information includes at least one of the following: starting time of a subframe or a symbol of the first signal, and information about an offset between a timing of the first signal and a timing of the network side device;
the delimiter is used to indicate a starting moment of the first signal;
the preamble sequence is used to indicate information related to signal frame synchronization of the first signal;
the frequency shift parameter is used to indicate parameter information for frequency shifting the first signal;
the transmission identifier is used to indicate whether the first signal is transmitted periodically; and
the total transmission duration is used to indicate total duration for transmission of the first signal.

Optionally, the obtaining module is further configured to:
obtain the signal transmission parameter in at least one of the following manners:

receiving first indication information sent by the network side device, where the first indication information is used to indicate the signal transmission parameter to the first terminal;
receiving second indication information sent by the network side device, where the second indication information is used to indicate the signal transmission parameter to the second terminal, and the second indication information is information that both the first terminal and the second terminal are capable of demodulating;
receiving third indication information sent by the second terminal, where the third indication information is used to indicate the signal transmission parameter to the first terminal; and
determining the signal transmission parameter.

Optionally, the first indication information or the second indication information is carried in at least one of the following:

downlink control information DCI;
a preamble sequence;
radio resource control RRC signaling; and
a media access control control element MAC CE.

Optionally, the third indication information is carried in at least one of the following:

two-step sidelink control information SCI;
one-step SCI;
a preamble sequence;
sidelink SL RRC signaling; and
a sidelink SL MAC CE.

Optionally, the sending module 211 is further configured to:

demodulate and decode the first signal based on the signal transmission parameter, modulate and encode the decoded signal to generate the second signal, and send the second signal to the network side device; or
amplify the first signal to obtain the second signal, and send the second signal to the network side device.

Optionally, the second terminal is powered in at least one of the following manners:

the second terminal is powered by a radio frequency signal transmitted by the network side device;
the second terminal is powered by a radio frequency signal transmitted by another device;

the second terminal is powered by a mechanical power supply;

the second terminal is powered by a vibration power supply;

the second terminal is powered by solar energy; and

the second terminal is powered by thermal energy.

The apparatus according to this embodiment can be used to perform the method in any one of the foregoing first terminal-side method embodiments. The specific implementation process and technical effects of the apparatus in this embodiment are similar to those in the first terminal-side method embodiments. For details, refer to the detailed description in the first terminal-side method embodiment, which are not repeated herein.

FIG. 20 is a second schematic structural diagram of a backscatter communication apparatus according to this application. As shown in FIG. 20, the backscatter communication apparatus according to this embodiment includes:

a sending module 220, configured to send, through backscattering, a first signal to a first terminal based on a signal transmission parameter.

According to the apparatus in this embodiment, the sending module sends, through backscattering, the first signal to the first terminal based on the signal transmission parameter. The first terminal receives the first signal sent by the sending module through backscattering based on the signal transmission parameter, and sends a second signal to a network side device. In other words, the backscatter communication apparatus can communicate with other devices. The second signal is obtained based on the first signal. According to the foregoing solution, communication between a BSC terminal, a relay terminal, and a base station in a bistatic backscatter communication architecture is implemented.

Optionally, the apparatus further includes: an obtaining module 210, configured to obtain the signal transmission parameter, where optionally, the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, period length information of a preamble sequence, synchronization information, a frequency shift parameter, an identifier of the second terminal, an identifier of the first terminal, a transmission identifier, and total transmission duration that is for a modulated signal, where

the time window is used to indicate a time window in which the first signal is sent;

the synchronization information includes starting time of a subframe or a symbol of the first signal, or information about an offset between a timing of the first signal and a timing of the network side device;

the delimiter is used to indicate a starting moment of the first signal;

the preamble sequence is used to indicate information related to signal frame synchronization of the first signal;

the frequency shift parameter is used to indicate parameter information for frequency shifting the first signal;

the transmission identifier is used to indicate whether the first signal is transmitted periodically; and

the total transmission duration is used to indicate total duration for transmission of the first signal.

Optionally, the obtaining module 210 is further configured to:

obtain the signal transmission parameter in at least one of the following manners:

receiving second indication information sent by the network side device, where the second indication information is used to indicate the signal transmission parameter to the second terminal, and the second indication information is information that both the first terminal and the second terminal are capable of demodulating;

receiving fourth indication information sent by the first terminal, where the fourth indication information is used to indicate the signal transmission parameter to the second terminal; and

determining the signal transmission parameter.

Optionally, the sending module 220 is further configured to:

send third indication information to the first terminal, where the third indication information is used to indicate the signal transmission parameter to the first terminal.

Optionally, the second indication information is carried in at least one of the following:

downlink control information DCI;

a preamble sequence;

radio resource control RRC signaling; and

a media access control control element MAC CE.

Optionally, the third indication information is carried in at least one of the following:

two-step sidelink control information SCI;

one-step SCI;

a preamble sequence;

sidelink SL RRC signaling; and

a sidelink SL MAC CE.

Optionally, the fourth indication information is carried in at least one of the following:

two-step sidelink control information SCI;
one-step SCI;
a preamble sequence;
sidelink SL RRC signaling; and
a sidelink SL MAC CE.

Optionally, the second terminal is powered in at least one of the following manners:

the second terminal is powered by a radio frequency signal transmitted by the network side device;
the second terminal is powered by a radio frequency signal transmitted by another device;
the second terminal is powered by a mechanical power supply;
the second terminal is powered by a vibration power supply;
the second terminal is powered by solar energy; and
the second terminal is powered by thermal energy.

The apparatus according to this embodiment can be used to perform the method in any one of the foregoing second terminal-side method embodiments. The specific implementation process and technical effects of the apparatus in this embodiment are similar to those in the second terminal-side method embodiments. For details, refer to the detailed description in the second terminal-side method embodiment, which are not repeated herein.

FIG. 21 is a third schematic structural diagram of a communication apparatus according to this application. As shown in FIG. 21, the communication apparatus according to this embodiment includes:

a receiving module 230, configured to receive a second signal sent by a first terminal, where the second signal is obtained by the first terminal based on a first signal sent by a second terminal, and the first signal is sent by the second terminal through backscattering based on a signal transmission parameter; and
a processing module 231, configured to perform target processing on the second signal based on the signal transmission parameter.

According to the apparatus in this embodiment, the second terminal sends, through backscattering, the first signal to the first terminal based on the signal transmission parameter. The first terminal receives the first signal sent by a second terminal through backscattering based on the signal transmission parameter, and sends a second signal to a network side device. In other words, the second terminal performing backscattering can communicate with other devices. The receiving module receives the second signal sent by the first terminal, where the second signal is obtained based on the first signal. The processing module can perform target processing on the second signal based on the signal transmission parameter. According to the foregoing solution, communication between a BSC terminal, a relay terminal, and a base station in a bistatic backscatter communication architecture is implemented.

Optionally, the apparatus further includes:
an obtaining module, configured to obtain the signal transmission parameter, where optionally, the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, period length information of a preamble sequence, synchronization information, a frequency shift parameter, an identifier of the second terminal, an identifier of the first terminal, a transmission identifier, or total transmission duration that is for a modulated signal, where
the time window is used to indicate a time window in which the first signal is sent;
the synchronization information includes starting time of a subframe or a symbol of the first signal, or information about an offset between a timing of the first signal and a timing of the network side device;
the delimiter is used to indicate a starting moment of the first signal;
the preamble sequence is used to indicate information related to signal frame synchronization of the first signal;
the frequency shift parameter is used to indicate parameter information for frequency shifting the first signal;
the transmission identifier is used to indicate whether the first signal is transmitted periodically; and
the total transmission duration is used to indicate total duration for transmission of the first signal.

Optionally, the obtaining module is further configured to:
obtain the signal transmission parameter in at least one of the following manners:

receiving fifth indication information sent by the second terminal, where the fifth indication information is used to indicate the signal transmission parameter to the network side device;
receiving sixth indication information sent by the first terminal, where the sixth indication information is used to indicate the signal transmission parameter to the network side device; and
determining the signal transmission parameter.

Optionally, the apparatus further includes:

a sending module, configured to send first indication information to the first terminal, where the first indication information is used to indicate the signal transmission parameter to the first terminal; or

a sending module, configured to send second indication information to the second terminal, where the second indication information is used to indicate the signal transmission parameter to the second terminal; or

a sending module, configured to send second indication information to the first terminal, where the second indication information is used to indicate the signal transmission parameter to the first terminal.

Optionally, the first indication information or the second indication information is carried in at least one of the following:

downlink control information DCI;
a preamble sequence;
radio resource control RRC signaling; and
a media access control control element MAC CE.

Optionally, the fifth indication information or the sixth indication information is carried in at least one of the following:

two-step sidelink control information SCI;
one-step SCI;
a preamble sequence;
sidelink SL RRC signaling; and
a sidelink SL MAC CE.

The apparatus according to this embodiment can be used to perform the method in any one of the foregoing network side device-side method embodiments. The specific implementation process and technical effects of the apparatus in this embodiment are similar to those in the network side device-side method embodiments. For details, refer to the detailed description in the network side device-side method embodiment, which are not repeated herein.

The backscatter communication apparatus in this embodiment of this application may be an apparatus electronic device, such as an apparatus or an electronic device with an operating system, or a component in a terminal electronic device, such as an integrated circuit or a chip. The apparatus or the electronic device may be a mobile terminal or may be a non-mobile terminal device other than a terminal. For example, the mobile terminal may include, but is not limited to, the types of the terminal 11 listed above, and the non-mobile terminal device may be a server, a network attached storage (Network Attached Storage, NAS), a personal computer (Personal Computer, PC), a television (television, TV), a teller machine, a self-service machine, or the like. This is not specifically limited in this embodiment of this application.

The backscatter communication apparatus provided in embodiments of this application can implement the processes implemented in the method embodiments of FIG. 11 to FIG. 18, and achieve the same technical effects. To avoid repetition, details are not described herein again.

Optionally, as shown in FIG. 22, an embodiment of this application further provides a communication device 2200, including a processor 2201 and a memory 2202. The memory 2202 stores a program or instructions executable on the processor 2201. For example, when the communication device 2200 is a terminal, the program or the instructions, when executed by the processor 2201, implement the steps of the embodiments of the foregoing backscatter communication method, and can achieve the same technical effects. When the communication device 2200 is a network side device, the program or the instructions, when executed by the processor 2201, implement the steps of the embodiments of the foregoing backscatter communication method, and can achieve the same technical effects. To avoid repetition, details are not described herein again.

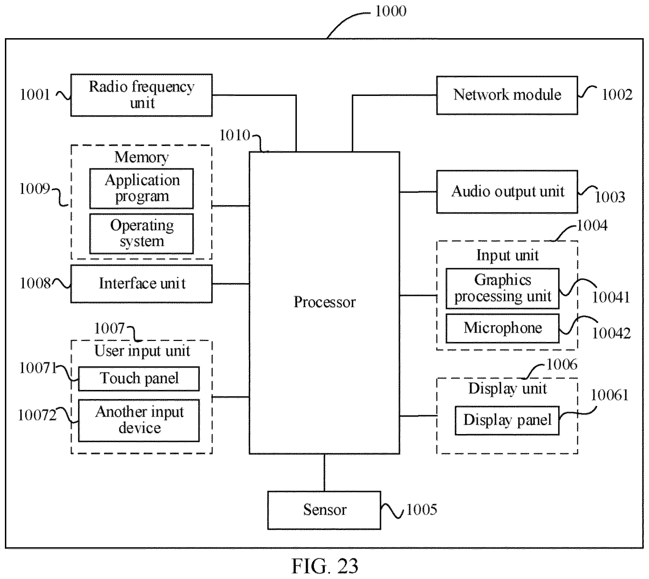

An embodiment of this application further provides a first terminal, including a processor and a communication interface, where the communication interface is configured to receive a first signal that is sent by a second terminal through backscattering based on a signal transmission parameter; and send a second signal to a network side device. The first terminal embodiment corresponds to the foregoing first terminal-side method embodiment. Each implementation process and implementation of the foregoing method embodiment can be applied to the first terminal embodiment, and can achieve the same technical effects. Specifically, FIG. 23 is a schematic diagram of a hardware structure of a terminal according to an embodiment of this application.

The terminal 1000 includes, but is not limited to, at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include the power supply (for example, a battery) for supplying power to the components. The power supply may be logically connected to the processor 1010 by using a power management system, thereby implementing functions such as charging, discharging, and power consumption management by using the power management system. A terminal structure shown in FIG. 23 does not constitute a limitation to the terminal, and the terminal may include more or fewer components than those shown in the figure, or some components may be combined, or a different component deployment may be used. Details are not described herein again.

It should be understood that in embodiments of this application, the input unit 1004 may include a graphics processing unit (Graphics Processing Unit, GPU) 10041 and a microphone 10042, and the graphics processing unit 10041 processes image data of still images or videos obtained by an image capture apparatus (for example, a camera) in a video capture mode or an image capture mode. The display unit 1006 may include a display panel 10061, and the display panel 10061 may be configured in a form such as a liquid crystal display or an organic light-emitting diode. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a functional key (for example, a volume control key or a switch key), a track ball, a mouse, and a joystick, which are not repeated herein.

In this embodiment of this application, the radio frequency unit 1001 receives downlink data from a network side device and then transmits the data to the processor 1010 for processing. In addition, the radio frequency unit 1001 may send uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store software programs or instructions, and various pieces of data. The memory 1009 may mainly include a first storage area storing a program or instructions and a second storage area storing data. The first storage area may store an operating system, an application program or instruction required by at least one function (for example, a sound playing function and an image playing function), and the like. In addition, the memory 1009 may include a volatile memory or a non-volatile memory, or the memory 1009 may include both a volatile and a non-volatile memory. The memory may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 1009 in this embodiment of this application includes, but is not limited to, such memories and any other suitable types of memories, for example, at least one magnetic disk storage device, a flash memory, or other volatile solid-state storage devices.

The processor 1010 may include one or more processing units. Optionally, the processor 1010 integrates an application processor and a modem processor. The application processor mainly processes operations related to an operating system, a user interface, an application program or instructions, and the like. The modem processor mainly processes wireless communication signals, and may be, for example, a baseband processor. It may be understood that the foregoing modem processor may either not be integrated into the processor 1010.

The radio frequency unit 1001 is configured to receive a first signal that is sent by a second terminal through backscattering based on a signal transmission parameter; and

send a second signal to a network side device, where the second signal is obtained based on the first signal.

In the foregoing implementation solution, the second terminal sends, through backscattering, the first signal to the first terminal based on the signal transmission parameter. The radio frequency unit receives the first signal sent by a second terminal through backscattering based on the signal transmission parameter, and sends a second signal to a network side device. In other words, the second terminal performing backscattering can communicate with other devices. The network side device receives the second signal sent by the first terminal, where the second signal is obtained based on the first signal. The processor can perform target processing on the second signal based on the signal transmission parameter. According to the foregoing solution, communication between a BSC terminal, a relay terminal, and a base station in a bistatic backscatter communication architecture is implemented.

Optionally, the radio frequency unit 1001 is further configured to obtain the signal transmission parameter, where the signal transmission parameter includes at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, preamble sequence synchronization information, a frequency shift parameter, an identifier of the second terminal, an identifier of the first terminal, a transmission identifier, and total transmission duration that is for a modulated signal, where

the time window is used to indicate a time window in which the first signal is sent;

the synchronization information includes at least one of the following: starting time of a subframe or a symbol of the first signal, and information about an offset between a timing of the first signal and a timing of the network side device;

the delimiter is used to indicate a starting moment of the first signal;

the preamble sequence is used to indicate information related to signal frame synchronization of the first signal;

the frequency shift parameter is used to indicate parameter information for frequency shifting the first signal;

the transmission identifier is used to indicate whether the first signal is transmitted periodically; and

the total transmission duration is used to indicate total duration for transmission of the first signal.

Optionally, the radio frequency unit 1001 is further configured to:
obtain the signal transmission parameter in at least one of the following manners:

receiving first indication information sent by the network side device, where the first indication information is used to indicate the signal transmission parameter to the first terminal;

receiving second indication information sent by the network side device, where the second indication information is used to indicate the signal transmission parameter to the second terminal, and the second indication information is information that both the first terminal and the second terminal are capable of demodulating;

receiving third indication information sent by the second terminal, where the third indication information is used to indicate the signal transmission parameter to the first terminal; and

obtaining the signal transmission parameter determined by the processor 1010.

In the foregoing implementation, the first terminal can obtain the signal transmission parameter in various manners. This is highly flexible, and implementation complexity is low.

Optionally, the first indication information or the second indication information is carried in at least one of the following:

downlink control information DCI;
a preamble sequence;
radio resource control RRC signaling; and
a media access control control element MAC CE.

Optionally, the third indication information is carried in at least one of the following:

two-step sidelink control information SCI;
one-step SCI;
a preamble sequence;

sidelink SL RRC signaling; and
a sidelink SL MAC CE.

Optionally, the radio frequency unit 1001 is further configured to:

demodulate and decode the first signal based on the signal transmission parameter, modulate and encode the decoded signal to generate the second signal, and send the second signal to the network side device; or

amplify the first signal to obtain the second signal, and send the second signal to the network side device.

In the foregoing implementation, the second signal sent by the first terminal to the network side device may be generated based on the first signal through amplification or parsing and then re-modulation and encoding. This is highly flexible, and the second signal generated through re-parsing is more reliable.

Optionally, the second terminal is powered in at least one of the following manners:

the second terminal is powered by a radio frequency signal transmitted by the network side device;

the second terminal is powered by a radio frequency signal transmitted by another device;

the second terminal is powered by a mechanical power supply;

the second terminal is powered by a vibration power supply;

the second terminal is powered by solar energy; and

the second terminal is powered by thermal energy.

In the foregoing implementation, the second terminal can be powered in various manners. This is highly flexible, and can increase reliability of the device.

An embodiment of this application further provides a network side device, including a processor and a communication interface. The communication interface is configured to receive a second signal sent by a first terminal, where the second signal is obtained by the first terminal based on a first signal sent by a second terminal, and the first signal is sent by the second terminal through backscattering based on a signal transmission parameter; and the processor is configured to perform target processing on the second signal based on the signal transmission parameter. This network side device embodiment corresponds to the foregoing network side device method embodiment. Each implementation process and implementation of the foregoing method embodiment can be applied to this network side device embodiment, and can achieve the same technical effects.

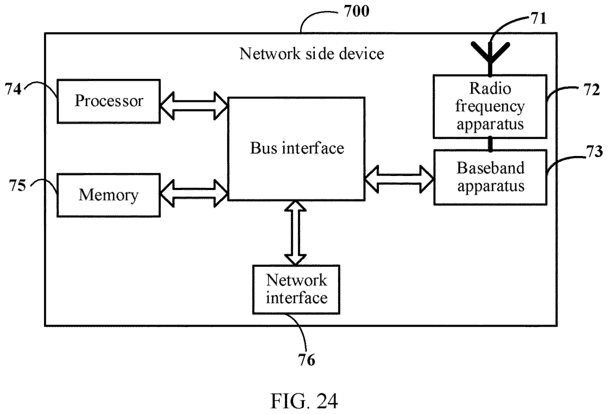

Specifically, an embodiment of this application further provides a network side device. As shown in FIG. 24, the network side device 700 includes: an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes information to be sent, and sends the information to the radio frequency apparatus 72. The radio frequency apparatus 72 processes the received information and sends the information by using the antenna 71.

The backscatter communication apparatus may be located in the baseband apparatus 73, and the method performed by the network side device in the foregoing embodiment may be implemented in the baseband apparatus 73, where the baseband apparatus 73 includes a baseband processor 74 and a memory 75.

The baseband apparatus 73 may include, for example, at least one baseband plate. A plurality of chips are disposed on the baseband plate. As shown in FIG. 24, one of the plurality of chips is, for example, the baseband processor 74, and is connected to the memory 75 through a bus interface, to invoke a program in the memory 75 to perform operations of the network device in the foregoing method embodiment.

The network side device may further include a network interface 76, configured to exchange information with the radio frequency apparatus 72. The interface is, for example, a common public radio interface (Common Public Radio Interface, CPRI).

Specifically, the network side device 700 in this embodiment of the present invention further includes: instructions or a program stored in the memory 75 and executable on the processor 74. The processor 74 invokes the instructions or the program in the memory 75 to perform the method executed by each module shown in FIG. 21, and achieve the same technical effects. To avoid repetition, details are not repeated herein.

An embodiment of this application further provides a readable storage medium. The readable storage medium stores a program or instructions, where the program or the instructions, when executed by a processor, implement the processes of embodiments of the foregoing backscatter communication method, and achieve the same technical effects. To avoid repetition, details are not described herein again.

The processor is the processor in the terminal described in the foregoing embodiment. The readable storage medium includes a computer-readable storage medium such as a computer read only memory (ROM), a random access memory (RAM), a magnetic disk, or an optical disk.

An embodiment of this application further provides a chip, where the chip includes a processor and a communication interface, the communication interface is coupled to the processor, and the processor is configured to run a program or instructions, to implement the processes of embodiments of the foregoing backscatter communication method, and achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program/program product, stored in a storage medium, where the computer program/program product is executed by at least one processor to implement the processes of the embodiments of the foregoing backscatter communication method, and can achieve the same technical effects. To avoid repetition, details are not described herein again.

An embodiment of this application further provides a backscatter communication system, including: a first terminal, a second terminal, and a network side device. The first terminal may be configured to perform the steps of the backscatter communication method described above. The second terminal may be configured to perform the steps of the backscatter communication method described above. The network side device may be configured to perform the steps of the backscatter communication method described above.

It should be noted that the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

1. A backscatter communication method, comprising:

   receiving, by a first terminal, a first signal that is sent by a second terminal through backscattering based on a signal transmission parameter; and
   sending, by the first terminal, a second signal to a network side device, wherein the second signal is obtained based on the first signal.

2. The backscatter communication method according to claim 1, wherein the method further comprises:
   obtaining, by the first terminal, the signal transmission parameter, wherein the signal transmission parameter comprises at least one of the following:

   a time domain resource, a frequency domain resource, a time window, a precoding parameter, a space-time code parameter, an aperiodic transmission mode, period length information, time information of signal transmission within a transmission period, a modulation method, a coding method, a delimiter, preamble sequence synchronization information, a frequency shift parameter, an identifier of the second terminal, an identifier of the first terminal, a transmission identifier, and total transmission duration that is for a modulated signal; wherein
   the time window is used to indicate a time window in which the first signal is sent;
   the synchronization information comprises at least one of the following: starting time of a subframe or a symbol of the first signal, and information about an offset between a timing of the first signal and a timing of the network side device;
   the delimiter is used to indicate a starting moment of the first signal;
   the preamble sequence is used to indicate information related to signal frame synchronization of the first signal;
the frequency shift parameter is used to indicate parameter information for frequency shifting the first signal;
the transmission identifier is used to indicate whether the first signal is transmitted periodically; and
the total transmission duration is used to indicate total duration for transmission of the first signal.

3. The backscatter communication method according to claim 2, wherein the obtaining, by the first terminal, the signal transmission parameter comprises:
   obtaining, by the first terminal, the signal transmission parameter in at least one of the following manners:

   receiving, by the first terminal, first indication information sent by the network side device, wherein the first indication information is used to indicate the signal transmission parameter to the first terminal;
   receiving, by the first terminal, second indication information sent by the network side device, wherein the second indication information is used to indicate the signal transmission parameter to the second terminal, and the second indication information is information that both the first terminal and the second terminal are capable of demodulating;
   receiving, by the first terminal, third indication information sent by the second terminal, wherein the third indication information is used to indicate the signal transmission parameter to the first terminal; and
   determining, by the first terminal, the signal transmission parameter.

4. The backscatter communication method according to claim 3, wherein
   the first indication information or the second indication information is carried in at least one of the following:

   downlink control information DCI;
   a preamble sequence;
   radio resource control RRC signaling; and
   a media access control control element MAC CE.

5. The backscatter communication method according to claim 3, wherein
   the third indication information is carried in at least one of the following:

   two-step sidelink control information SCI;
   one-step SCI;

a preamble sequence;
sidelink SL RRC signaling; and
a sidelink SL MAC CE.

6. The backscatter communication method according to any one of claims 1 to 5, wherein the sending, by the first terminal, a second signal to a network side device comprises:

demodulating and decoding, by the first terminal, the first signal based on the signal transmission parameter to obtain a third signal, modulating and encoding the third signal to generate the second signal, and sending the second signal to the network side device; or
amplifying, by the first terminal, the first signal to obtain the second signal, and sending the second signal to the network side device.

7. The backscatter communication method according to any one of claims 1 to 5, wherein
the second terminal is powered in at least one of the following manners:

the second terminal is powered by a radio frequency signal transmitted by the network side device;
the second terminal is powered by a radio frequency signal transmitted by another device;
the second terminal is powered by a mechanical power supply;
the second terminal is powered by a vibration power supply;
the second terminal is powered by solar energy; and
the second terminal is powered by thermal energy.

8. A backscatter communication method, comprising: sending, by a second terminal through backscattering, a first signal to a first terminal based on a signal transmission parameter.

9. The backscatter communication method according to claim 8, wherein the method further comprises: obtaining, by the second terminal, the signal transmission parameter, wherein the signal transmission parameter comprises at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, preamble sequence synchronization information, a frequency shift parameter, an identifier of the second terminal, an identifier of the first terminal, a transmission identifier, and total transmission duration that is for a modulated signal; wherein
the time window is used to indicate a time window in which the first signal is sent;
the synchronization information comprises at least one of the following: starting time of a subframe or a symbol of the first signal, and information about an offset between a timing of the first signal and a timing of a network side device;
the delimiter is used to indicate a starting moment of the first signal;
the preamble sequence is used to indicate information related to signal frame synchronization of the first signal;
the frequency shift parameter is used to indicate parameter information for frequency shifting the first signal;
the transmission identifier is used to indicate whether the first signal is transmitted periodically; and
the total transmission duration is used to indicate total duration for transmission of the first signal.

10. The backscatter communication method according to claim 9, wherein the obtaining, by the second terminal, the signal transmission parameter comprises: obtaining, by the second terminal, the signal transmission parameter in at least one of the following manners:

receiving, by the second terminal, second indication information sent by the network side device, wherein the second indication information is used to indicate the signal transmission parameter to the second terminal, and the second indication information is information that both the first terminal and the second terminal are capable of demodulating;
receiving, by the second terminal, fourth indication information sent by the first terminal, wherein the fourth indication information is used to indicate the signal transmission parameter to the second terminal; and
determining, by the second terminal, the signal transmission parameter.

11. The backscatter communication method according to any one of claims 8 to 10, wherein the method further comprises:
sending, by the second terminal, third indication information to the first terminal, wherein the third indication information is used to indicate the signal transmission parameter to the first terminal.

12. The backscatter communication method according to claim 10, wherein the second indication information is carried in at least one of the following:

downlink control information DCI;

a preamble sequence;

radio resource control RRC signaling; and

a media access control control element MAC CE.

13. The backscatter communication method according to claim 11, wherein the third indication information is carried in at least one of the following:

two-step sidelink control information SCI;

one-step SCI;

a preamble sequence;

sidelink SL RRC signaling; and

a sidelink SL MAC CE.

14. The backscatter communication method according to claim 10, wherein the fourth indication information is carried in at least one of the following:

two-step sidelink control information SCI;

one-step SCI;

a preamble sequence;

sidelink SL RRC signaling; and

a sidelink SL MAC CE.

15. The backscatter communication method according to any one of claims 8 to 10, wherein the second terminal is powered in at least one of the following manners:

the second terminal is powered by a radio frequency signal transmitted by the network side device;

the second terminal is powered by a radio frequency signal transmitted by another device;

the second terminal is powered by a mechanical power supply;

the second terminal is powered by a vibration power supply;

the second terminal is powered by solar energy; and

the second terminal is powered by thermal energy.

16. A backscatter communication method, comprising:

receiving, by a network side device, a second signal sent by a first terminal, wherein the second signal is obtained by the first terminal based on a first signal sent by a second terminal, and the first signal is sent by the second terminal through backscattering based on a signal transmission parameter; and

performing, by the network side device, target processing on the second signal based on the signal transmission parameter.

17. The backscatter communication method according to claim 16, wherein the method further comprises: obtaining, by the network side device, the signal transmission parameter, wherein the signal transmission parameter comprises at least one of the following:

a time domain resource, a frequency domain resource, a time window, a precoding parameter, a space-time code parameter, an aperiodic transmission mode, period length information, time information of signal transmission within a transmission period, a modulation method, a coding method, a delimiter, preamble sequence synchronization information, a frequency shift parameter, an identifier of the second terminal, an identifier of the first terminal, a transmission identifier, and total transmission duration that is for a modulated signal, wherein

the time window is used to indicate a time window in which the first signal is sent;

the synchronization information comprises at least one of the following: starting time of a subframe or a symbol of the first signal, and information about an offset between a timing of the first signal and a timing of the network side device;

the delimiter is used to indicate a starting moment of the first signal;

the preamble sequence is used to indicate information related to signal frame synchronization of the first signal;

the frequency shift parameter is used to indicate parameter information for frequency shifting the first signal;

the transmission identifier is used to indicate whether the first signal is transmitted periodically; and

the total transmission duration is used to indicate total duration for transmission of the first signal.

18. The backscatter communication method according to claim 17, wherein the obtaining, by the network side device, the signal transmission parameter comprises:

obtaining, by the network side device, the signal transmission parameter in at least one of the following manners:

receiving, by the network side device, fifth indication information sent by the second terminal, wherein the fifth indication information is used to indicate the signal transmission parameter to the network side device;

receiving, by the network side device, sixth indication information sent by the first terminal, wherein the sixth indication information is used to indicate the signal transmission parameter to the network side device; and

determining, by the network side device, the signal transmission parameter.

19. The backscatter communication method according to any one of claims 16 to 18, wherein the method further comprises:

sending, by the network side device, first indication information to the first terminal, wherein the first indication information is used to indicate the signal transmission parameter to the first terminal; or
sending, by the network side device, second indication information to the second terminal, wherein the second indication information is used to indicate the signal transmission parameter to the second terminal; or
sending, by the network side device, second indication information to the first terminal, wherein the second indication information is used to indicate the signal transmission parameter to the first terminal.

20. The backscatter communication method according to claim 19, wherein the first indication information or the second indication information is carried in at least one of the following:

downlink control information DCI;
a preamble sequence;
radio resource control RRC signaling; and
a media access control control element MAC CE.

21. The backscatter communication method according to claim 18, wherein the fifth indication information or the sixth indication information is carried in at least one of the following:

two-step sidelink control information SCI;
one-step SCI;
a preamble sequence;
sidelink SL RRC signaling; and
a sidelink SL MAC CE.

22. A communication apparatus, comprising:

a receiving module, configured to receive a first signal that is sent by a second terminal through backscattering based on a signal transmission parameter; and
a sending module, configured to send a second signal to a network side device, wherein the second signal is obtained based on the first signal.

23. A backscatter communication apparatus, comprising:

a sending module, configured to send, through backscattering, a first signal to a first terminal based on a signal transmission parameter.

24. A communication apparatus, comprising:

a receiving module, configured to receive a second signal sent by a first terminal, wherein the second signal is obtained by the first terminal based on a first signal sent by a second terminal, and the first signal is sent by the second terminal through backscattering based on a signal transmission parameter; and
a processing module, configured to perform target processing on the second signal based on the signal transmission parameter.

25. A first terminal, comprising a processor and a memory, wherein the memory stores a program or instructions executable on the processor, and the program or the instructions, when executed by the processor, implement the steps of the backscatter communication method according to any one of claims 1 to 7.

26. A second terminal, comprising a processor and a memory, wherein the memory stores a program or instructions executable on the processor, and the program or the instructions, when executed by the processor, implement the steps of the backscatter communication method according to any one of claims 8 to 15.

27. A network side device, comprising a processor and a memory, wherein the memory stores a program or instructions executable on the processor, and the program or the instructions, when executed by the processor, implement the steps of the backscatter communication method according to any one of claims 16 to 21.

28. A readable storage medium, storing a program or instructions, wherein the program or the instructions, when executed by a processor, implement the backscatter communication method according to any one of claims 1 to 7, or implement the backscatter communication method according to any one of claims 8 to 15, or implement the backscatter communication method according to any one of claims 16 to 21.

$S_{in}(t)$

$S_{out}(t)$

Incident
RF signal

Modulated
backscattered signal

$T_T(t)$

$T_T = T_0$

$T_T = T_1$

$T_T = T_2$

$T_T = T_n$

Symbol 0 $\longrightarrow$ Impedance 0
Symbol 1 $\longrightarrow$ Impedance 1
$\vdots$
Symbol n $\longrightarrow$ Impedance n

Controller

Channel coding
modulation module

FIG. 1

FIG. 2

Network side device

11

11

Terminal

Terminal

12

Reader

BSC sender

FIG. 3

RF carrier transmitter

BSC receiver

BSC sender

FIG. 4

Network side
device

BSC terminal

⟶ indicating a downlink

◂ – — indicating an uplink

⟿ RF radio frequency

FIG. 5

Network side
device

BSC terminal

Relay

⟶ indicating a downlink

◂ – — indicating an uplink

⟿ RF radio frequency

FIG. 6

FIG. 7

FIG. 8

Network side
device

Legacy terminal

BSC terminal

⟶ indicating a downlink
◄ – — indicating an uplink
⟍⟋— RF radio frequency

FIG. 9

Network side
device

Legacy terminal

BSC terminal

⟶ indicating a downlink
◄ – — indicating an uplink
⟍⟋— RF radio frequency

FIG. 10

A first terminal receives a first signal that is sent by a second terminal through backscattering based on a signal transmission parameter

101

The first terminal sends a second signal to a network side device, where the second signal is obtained based on the first signal

102

FIG. 11

Network side
device

Legacy terminal

Second terminal

First terminal

······· indicating that the network side device sends indication information

─ ─ ─ indicating that the second terminal sends indication information

────► indicating a downlink

◄─ ─── indicating an uplink

──►── RF radio frequency

FIG. 12

Network side
device

Legacy terminal

Second terminal

First terminal

......... indicating that the network side device
sends indication information

———► indicating a downlink

◄ – — indicating an uplink

——⚡— RF radio frequency

FIG. 13

Network side
device

Legacy terminal

Second terminal

First terminal

_ _ _ indicating that the second terminal
sends indication information

———► indicating a downlink

◄ – — indicating an uplink

——⚡—RF radio frequency

FIG. 14

| Second terminal | First terminal | Network side device |
|---|---|---|

201: Send, through backscattering, a first signal to the first terminal based on a signal transmission parameter

202: Send a second signal to the network side device, where the second signal is obtained based on the first signal

FIG. 15

Network side device

Legacy terminal

First terminal

Second terminal

_ . _ .. indicating that the first terminal sends indication information

———▶ indicating a downlink

◀ ─ ── indicating an uplink

———— RF radio frequency

FIG. 16

A network side device receives a second signal sent by a first terminal, where the second signal is obtained by the first terminal based on a first signal sent by a second terminal, and the first signal is sent by the second terminal through backscattering based on a signal transmission parameter

301

The network side device performs target processing on the second signal based on the signal transmission parameter

302

FIG. 17

Network side device

Legacy terminal

First terminal

Second terminal

. _ . _ indicating that the first terminal sends indication information

──▶ indicating a downlink

◀ ── indicating an uplink

──⌁── RF radio frequency

FIG. 18

FIG. 19

FIG. 20

FIG. 21

FIG. 22

FIG. 23

FIG. 24

# INTERNATIONAL SEARCH REPORT

| International application No. |
| --- |
| **PCT/CN2022/138530** |

| | |
| --- | --- |
| **A.** | **CLASSIFICATION OF SUBJECT MATTER** |
| | H04W 24/02(2009.01)i |

According to International Patent Classification (IPC) or to both national classification and IPC

| **B.** | **FIELDS SEARCHED** |
| --- | --- |

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNABS, CNTXT, CNKI: 反向散射, 参数, 网络侧, 终端, 射频, RFID, 指示; WPABS, ENTXT: BSC, backscatter, parameter, BS, terminal, identification, radio frequency, tag

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 107786255 A (HUAWEI TECHNOLOGIES CO., LTD.) 09 March 2018 (2018-03-09) see description, paragraphs 0135-0173 | 1-28 |
| A | CN 112073082 A (CHENGDU HUAWEI TECHNOLOGIES CO., LTD.) 11 December 2020 (2020-12-11) entire document | 1-28 |
| A | CN 112187333 A (HUAWEI TECHNOLOGIES CO., LTD.) 05 January 2021 (2021-01-05) entire document | 1-28 |
| A | WO 2007012891 A2 (SIEMENS AKTIENGESELLSCHAFT) 01 February 2007 (2007-02-01) entire document | 1-28 |

☐ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 February 2023** | **26 February 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138530**

| Patent document cited in search report | | | Publication date (day/month/year) | Patent family member(s) | | | Publication date (day/month/year) |
|---|---|---|---|---|---|---|---|
| CN | 107786255 | A | 09 March 2018 | WO | 2018041001 | A1 | 08 March 2018 |
| CN | 112073082 | A | 11 December 2020 | None | | | |
| CN | 112187333 | A | 05 January 2021 | None | | | |
| WO | 2007012891 | A2 | 01 February 2007 | WO | 2007012891 | A3 | 28 June 2007 |

Form PCT/ISA/210 (patent family annex) (July 2022)

**REFERENCES CITED IN THE DESCRIPTION**

**Patent documents cited in the description**

- CN 202111547386